# EUROPEAN PATENT SPECIFICATION

(11) **EP 1 925 379 B1**
(45) Date of publication and mention of the grant of the patent: **20.07.2011**
(21) Application number: 07022829.1
(22) Date of filing: 26.11.2007
(51) Int. Cl.: B21D 39/02, B21D 53/88, B23K 11/11, B21D 43/00, B62D 65/06

(54) **Seaming and fastening apparatus for assembling members of a composite panel, particularly for a motor vehicle body**
Falz- und Befestigungsvorrichtung zur Montage von Elementen auf eine Verbundplatte, insbesondere für Kraftfahrzeugkarosserie
Appareil de sertissage et de fixation pour l'assemblage des éléments d'un panneau composite, en particulier pour la carrosserie d'un véhicule à moteur

(30) Priority: 27.11.2006 IT TO20060841
(43) Date of publication of application: 28.05.2008
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- EP-A- 1 240 970
- DE-A1- 10 020 231
- DE-A1- 10 023 351
- DE-A1- 19 927 208
- DE-A1- 19 944 910
- GB-A- 2 337 716
- US-A- 5 897 796

## Description

The present invention refers to a seaming and fastening apparatus for assembling members of a composite panel, particularly for a motor vehicle body.

The body of modern motor vehicles usually comprises composite panels used, for example, for manufacturing movable members such as the doors or the rear or front bonnet hatches, which include at least a pair of sheet members rigidly connected to each other.

In the most common case of panels consisting of two members, one member, the so-called skeleton, has mainly the function of support and resisting structure, while the other member is an outer covering panel which mainly carries out a shape function. These members are initially connected by seaming their peripheral edges, and then are fastened permanently during the so-called "sheet metal working" step. Usually, a polymeric adhesive layer, generally of the thermosetting type, is interposed between the two members of the composite panel at the peripheral zones thereof, which is subsequently brought into the condition of complete polymerization in order to fasten definitively the two members, in order to attain the permanent geometry of the composite panel.

After the seaming step of the two panel members, they undergo a subsequent fastening operation which may lie in welding predetermined zones of the panel or in heating the panel edges at the zones where the polymeric adhesive is present. The welding operation is usually performed by means of resistance welding tools of the indirect projection type, while the heating operation is typically performed by means of an induction heating device allowing to bring the adhesive to a temperature approximately close to 180°C, so as to reach its pre-polymerization condition. Both these methods for fastening the composite panel members have the advantage of preserving the integrity of the surfaces of the panel, because of they do not leave any visible trace on the outer surface of the panel.

A problem of the fastening step of the composite panel members which is performed after the seaming step, both of the indirect projection welding type or of the induction heating type, lies in the fact that such a fastening is usually performed in apparatuses which are separated from the seaming tool. In this manner, the risk exists that the members of the composite panel may endure relative movements during its transfer between the seaming tool and the fastening tool, with the resulting alteration of the geometry of the panel which may cause production of defective pieces.

GB-A-2 337 716, the main features of which are mentioned in the preamble of appended claim 1, discloses an apparatus of the type described above in which the risk exists that the members of the composite panel may endure relative movements during its transfer between the seaming tool and the fastening tool.

In the attempt to overcome this drawback, it has been proposed in DE-199 27 208 to perform the seaming and the indirect projection welding operations of a composite panel in an single apparatus, while the panel is supported by a same support structure. Although this known apparatus has the advantage that seaming and welding steps of a panel can be performed without deactivating the locking tools which keep the panel members in the close condition, so that a constant and precise reference of the panel members is held, it does not allow to perform the seaming and fastening operations in a satisfactory way since the panel members rest on a same support structure during both the seaming operation and the fastening operation.

In fact, it is known that the steaming operation requires an extremely sturdy support structure which is adapted to stand the application of considerable pressures, so that such a structure is usually made of metallic material with hardened surfaces, while the accomplishment of the indirect projection welding operation requires a resting structure of the panel which is made of nonmagnetic material, for example by means of supports of insulating material, in order that the welding current may pass only between the welding electrode and the earth electrodes through the sheet members of the panel, without leaks in the resting structure.

As a result, a single support structure, to be used for supporting the panel both during the seaming operation and during the fastening operation of the members thereof, reveals not to be able to provide an optimal support of the panel during both such operations and, in particular, it does not allow to manufacture composite panels of good quality.

In order to overcome these drawbacks, the subject of the invention is an apparatus such as claimed.

By virtue of this idea of solution, the apparatus according to the invention allows to perform the seaming operation while the members of the panel are kept close and rest on a first support structure which has optimal characteristics for allowing to stand the application of considerable pressures, and the subsequent fastening operation of the members of the seamed panel is performed while the seamed panel rests on another structure which has optimal characteristics for being used during an induction heating step or an indirect projection welding step, so that the seaming and the fastening operations of the panel members can be carried out in an highly effective and reliable manner. In particular, during the fastening step of the panel members by means of indirect projection welding, the welding current may pass between the welding electrodes and the earth electrodes through the sheet members of the panel without leaks, while during the induction heating fastening step the heating may be concentrated only on the metallic material of the panel.

The invention will be made more clear from the following detailed description, which has been provided with reference to the appended drawings, given by way of a non-limitative example and showing two modifications thereof, and in which:
- figure 1 is a front elevational schematic view of a tool according to a first modification of the invention, during the feeding step of the members of a composite panel to be seamed and fastened to each other,
- figure 2 is an enlarged view of a detail indicated by arrow II of figure 1, during the seaming step of the panel,
- figure 3 is an enlarged view of a detail indicated by arrow III in figure 2,
- figure 4 is view similar to figure 1, showing a transfer step of a seamed composite panel between a seaming station and a fastening station of the tool,
- figure 5 is a schematic perspective view of a tool according to the invention during a welding fastening step of the members of a seamed panel,
- figure 6 is an enlarged front elevational view of a detail indicated by arrow VI in figure 5,
- figure 7 is a perspective enlarged view of a detail indicated by arrow VII in figure 6,
- figure 8 is an enlarged front elevational view of a detail indicated by arrow VIII in figure 7,
- figure 9 is a schematic perspective view of a second modification of the tool of the invention, in which the fastening station of the seamed composite panel comprises an induction heating device, and
- figure 10 is an enlarged view of a detail indicated by arrow X in figure 9, in another operative configuration.

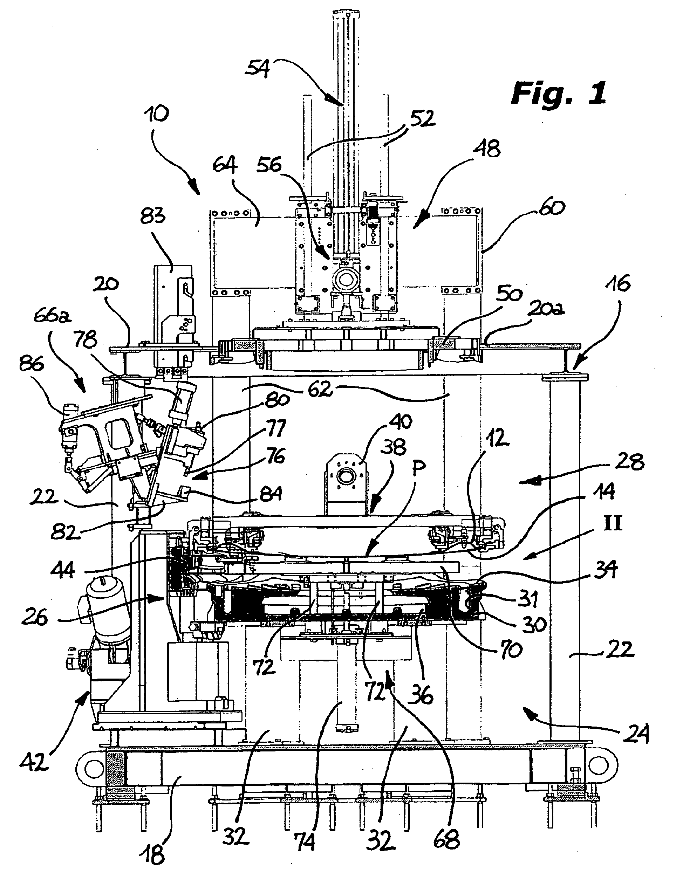

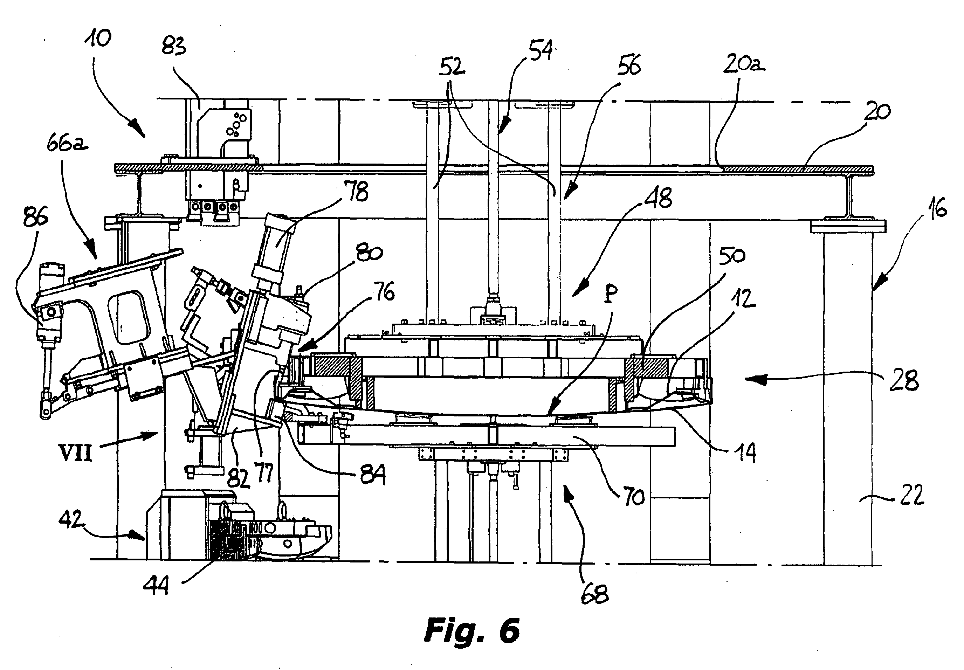

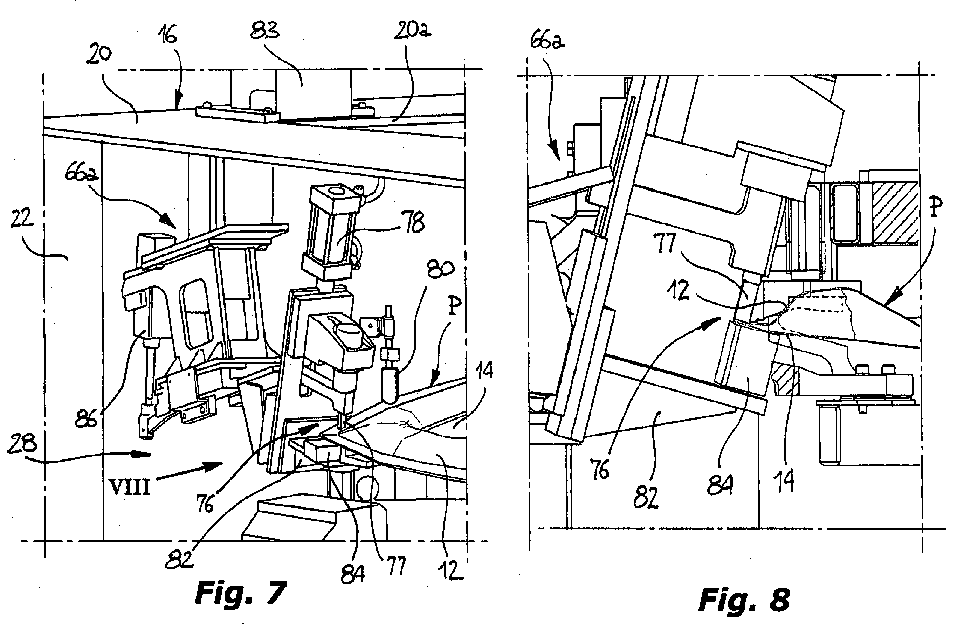

With initial reference to figures 1 to 8, a first modification of an apparatus for seaming and fastening the members of a composite panel P of a motor vehicle body, for example the hatch of a front bonnet, is indicated 10 in its whole. The metallic sheet members of the panel P consist, in a manner known per se, of a skeleton 12 and of an outer covering panel 14, which are intended to be rigidly fastened to each other.

The apparatus 10 comprises a frame 16 defined by a base 18 and by an upper wall 20, which are connected to each other by a series of vertical uprights 22, which frame delimits an inner working area 24. In the working area 24 are defined a lower zone in which a seaming station 26 is arranged, and an upper zone in which a fastening station 28 is present which, in the modification of figures 1 to 8, consists of a resistence welding station of the indirect projection type.

The seaming station 26 comprises a resting structure in the form of a stationary bench 30, supported by a series of column supports 32. The bench 30 is typically made of a metallic material, usually of steel, and has a shaped resting surface 34 facing upwards, with reference to the figures, which is usually subjected to a surface hardening process, and is adapted for allowing to rest the lower face of a panel P whose members 12 and 14 are kept close in a pre-assembled configuration.

In particular, the resting surface 34 of the bench 30 has a general frame shape which defines a through central opening 36, and is shaped so as to correspond to the edge of the panel P, on the side of the outer covering panel 14 thereof.

The panel P is usually fed to the seaming station 26 with its members 12 and 14 already pre-assembled, that is connected to each other in a loose way by folding a series of tongues (of a type known per se and not shown in the figures). Preferably, the feeding of the panel P to the station 26 is carried out automatically by a transfer frame 38 provided with holding members of the panel P known per se, having above a grasping appendage 40 intended to be engaged, for example, by the arm of an anthropomorphic robot (not shown in the figures), in order to allow to move a pre-assembled panel P from a store spaced with respect to the apparatus 10, to the seaming station 26, until it rests on the surface 34 of the bench 30.

At the and of the feeding step of a panel P to the seaming station 26, the frame 38 is moved away with respect to the apparatus 10.

At the station 26, the apparatus 10 comprises a series of seaming tools 42 of a type known per se, for example of the type described in the European patent application EP-A-1 574 268 in the name of the same Applicant, each of which comprises at least a seaming blade 44 adapted to be operated so as to fold peripheral edges of the covering panel 14 on the peripheral edge of the skeleton 12.

Pressure means, indicated in general by reference numeral 48, are also associated to the base 16, which are adapted to keep the members 12 and 14 of the panel P in a close and compressed condition during the seaming step. The pressure means 48 include a blank holder 50 shaped correspondingly to the upper face of the panel P, and having downwards projecting portions which are adapted to engage zones close to the edges of the skeleton 12 and of the covering panel 14.

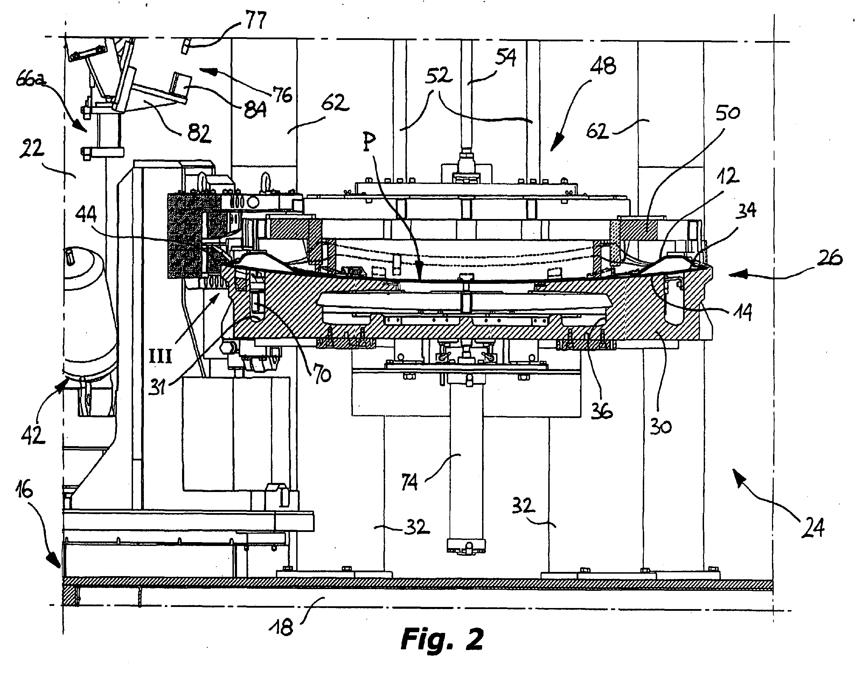

The blank holder 50 is movable vertically with respect to the working area 24 of the apparatus 10 along a pair of slide bars 52, as a result of the sliding of a control rod 54 whose movement is controlled by an actuator device 56 of a type known per se. The bars 52 and the actuator device 56 together with the respective rod 54 are supported by a cantilever support structure 60 which is held up by a pair of pillars 62 so as to stand above the frame 16, and which comprises a bracket 64 extending above the upper wall 20 of the base 16. The blank holder 50 is movable between a raised resting position (figure 1) in which it is arranged at an opening 20a of the wall 20, and a lowered position (figure 2) in which it engages the upper surface of a panel P resting on the bench 30 in order to compress the skeleton 12 on the covering panel 14 and to keep the panel P in a close contact with the bench 30.

The fastening station 28 of the apparatus 10, which is arranged above the seaming station 26 and is spaced from it, allows to perform a fastening process for permanently fastening the members 12 and 14 of the panel P which have been already seamed at the station 26. For this purpose, the station 28 comprises a series of support and welding tools 66a, only one of which is shown in the figures and will be described in the following in a greater detail.

In order to move the panel P between the station 26 and the station 28, the apparatus comprises handling means indicated in general by reference numeral 68.

The means 68, according to the embodiment shown in the figures, may comprise a movable support frame 70, adapted to engage the lower surface of the covering panel 14 of the panel P, and to move vertically with it within the working area 24 of the apparatus 10, in order to transfer it from the seaming station 26 to the fastening station 28. The frame 70 is part of a linear elevator unit which comprises a pair of sliding guides 72 and is controlled by the operation of an actuator 74 of a type known per se. Conveniently, the linear elevator unit is arranged at the through central opening 36 of the bench 30, and its frame 70, when the elevator unit is in its lowered position adjacent to the bench 30, can be received in a hollow seat 31 formed in the bench 30.

As an alternative or in combination with the elevator unit including the frame 70, the handling means 68 may comprise, according to an embodiment not shown in the figures, holding means associated with the blank holder 50, which consist for example of suction cup members adapted to grasp the composite panel P as a result of a vacuum action carried out both on the skeleton 12 and on the covering panel 14, so as to make the panel P selectively connected with the blank holder 50 during its moving step between the stations 26 and 28, at the end of the seaming step and before the fastening step is carried out. In this case, the blank holder 50 provided with the aforesaid holding means, carries out itself the function of a holding member of the panel P or, if the elevator unit described above is present at the same time, it carries out an auxiliary handling function with respect to such an elevator unit.

Each support and welding tool 66a of the station 28 is secured to the upper wall 20 of the frame 16 and includes an indirect projection resistance welding equipment 76, for example of the type known per se from the European patent application EP-A-1 442 819 in the name of the same Applicant. Each equipment 76 comprises a movable welding and pressure electrode 77, whose movement is controlled by an actuator 78, and a earth electrode 80. The electrodes 77 and 80 are feed through a feeding unit 83 conveniently associated to the upper wall 20 of the frame 16.

A bracket support member 82, associated to each of the welding electrodes 77, bears a shaped resting block 84, made of nonmagnetic material, such as a body coated by a layer of an insulating material, which shape corresponds to a respective lower zone of the panel P. The resting members 82 of the various tools 66a associated with the apparatus 10, define together a second resting structure of the panel P, intended to be used during the fastening operation carried out in the station 28.

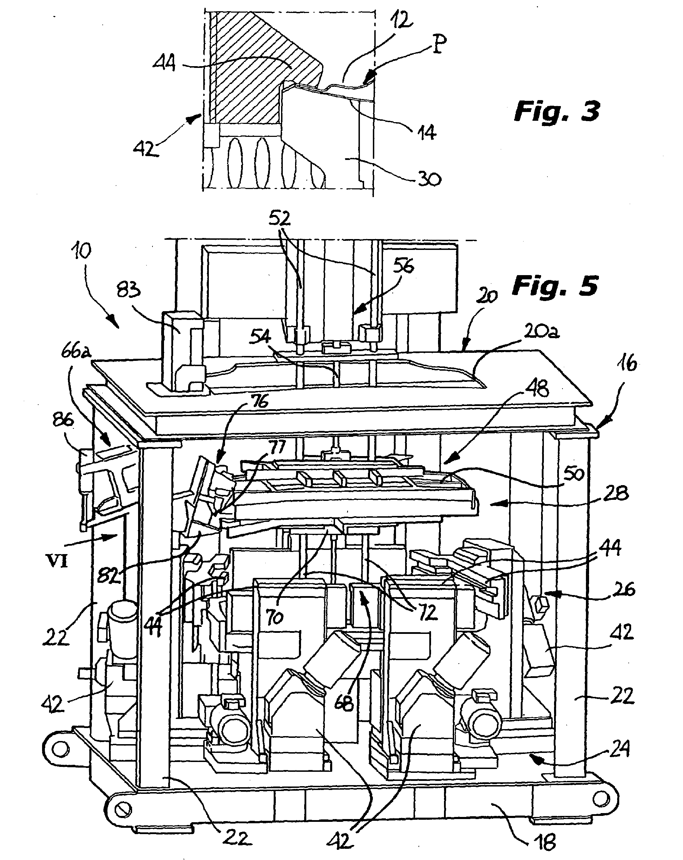

The support and welding tools 66a are movable between a retracted position (figures 1, 2 and 4), which is spaced from the travel of the panel P between the seaming station 26 and the fastening station 28, and an advanced position (figures 5 to 8) which can be reached as a result of the operation of an actuator 86 when the panel P is positioned at the station 28, in which the block 84 of the respective bracket member 82 engages a zone of the lower surface of the panel P, in order to support the panel during the fastening operation of its members 12 and 14 by welding.

In operation of the apparatus 10, a panel P to be seamed and fastened is fed to the seaming station 26 in its pre-assembled condition in which the members 12 and 14 are kept close, by means of the transfer frame 38. In general, the panel P may be arranged directly so as to rest on the bench 30, but, as an alternative, it may rest on the support frame 70 of the handling means 68, if it is provided, which assumes, in this case, a slightly raised position with respect to the bench 30, and is subsequently brought into engagement with the surface 34 of the bench 30, as a result of a lowering of the frame 70.

When the panel P has reached the correct resting position on the bench 30, at first the operation of the actuator device 56 is controlled in order to lower the blank holder 50 until the upper face of the panel P is engaged, so that its members 12 and 14 are compressed, and then the seaming tools 42 are operated so as to seam the peripheral edges of the covering panel 14 on the edges of the skeleton 12 by means of the seaming blades 44.

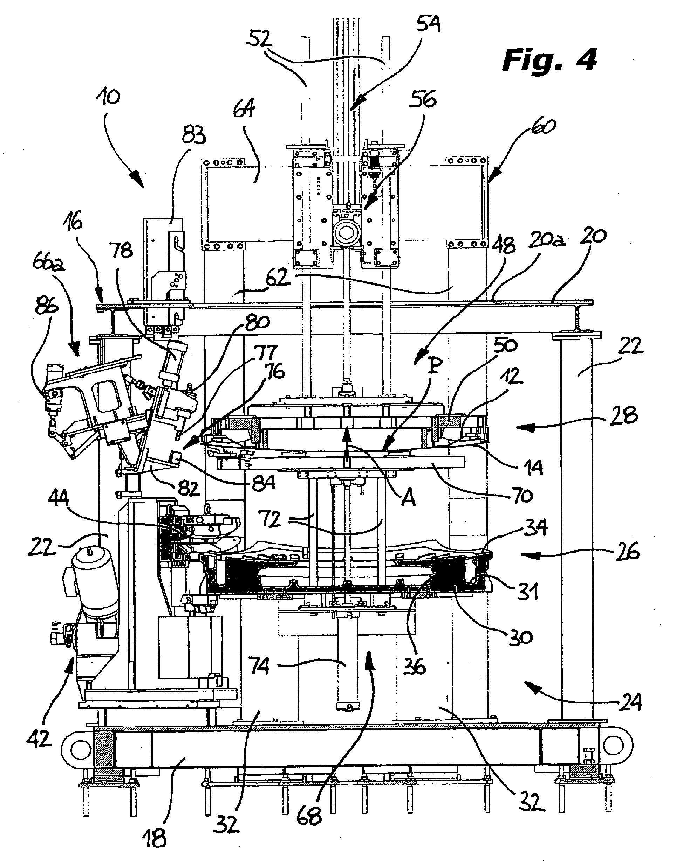

At the end of the seaming step, the seamed panel P is lifted in the direction indicated by arrow A of figure 4, in order to be brought to the fastening station 28. This movement of the panel P, caused by the handling means 68, can be obtained as a result of the operation of the actuator 74 and of the resulting lifting of the support frame 70, and/or by virtue of the grasping of the panel P by the aforesaid suction cup holding members and the lifting of the blank holder 50.

In both cases of handling of the panel P, both as a result of the lifting of the frame 70 or owing to the holding by the members associated with the blank holder 50, the movement of the blank holder 50 is controlled so as to take place simultaneously and in a coordinated manner with the lifting of the frame 70 and/or with the action of the suction cup holding means, in such a manner that the members 12 and 14 of the panel P are kept close and compressed in the corrected assembly position during the whole stroke of movement between the stations 26 and 28.

When the panel P reaches the fastening station 28, the actuators 86 are operated in order to move the tools 66a from their retracted position to their advanced position in which the resting blocks 84 of the bracket members 82 engage respective zones of the lower surface of the panel P, to support the panel P during the welding operation. Then, the actuators 78 are operated in order to bring the earth electrodes 80 into contact with the panel P and to activate the pressure and welding step by means of the welding electrodes 77, while the members 12 and 14 of the panel P are still kept compressed by the combined action of the frame 50 together with the frame 70 and/or the holding means of the frame 50.

A panel P seamed and welded in this manner can be removed from the apparatus 10, for example using again the transfer frame 38, after the panel P has been brought again to the station 26 in the resting condition on the bench 30 as a result of the descent of the blank holder 50 and possibly of the support frame 70, when it is provided, as well as after having brought back the tools 66a in their retracted position.

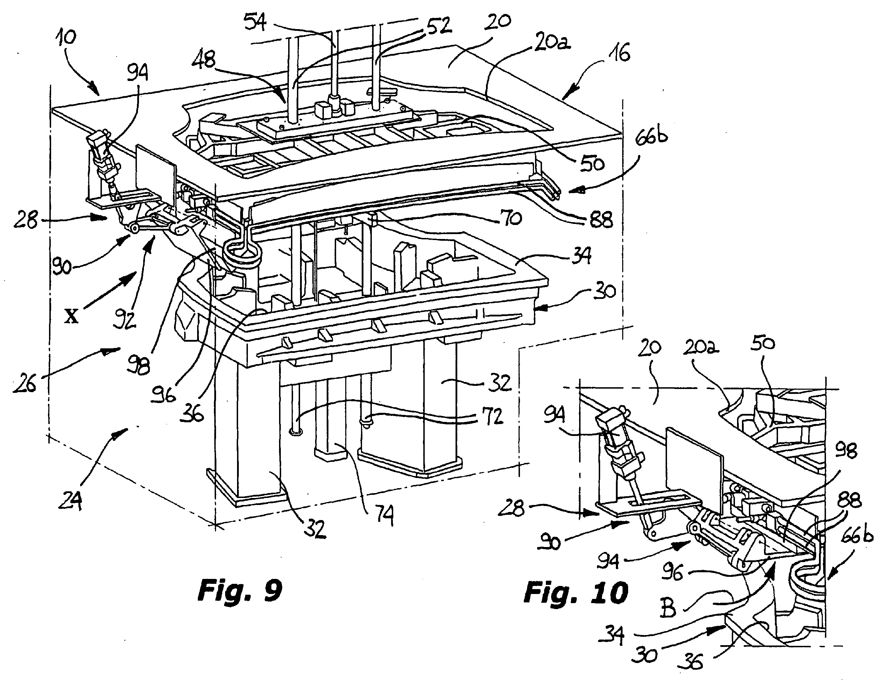

According to a modification of the invention shown in figures 9 and 10, in which the same numeral references have been used to indicate parts equal or similar to those of the previous modification, the fastening tool arranged at the station 28, indicated here by reference 66b, is of the induction heating type. It allows, in particular, to bring to a temperature approximately close to 180°C the thermosetting polymeric adhesive interposed beforehand between the peripheral edges of the skeleton 12 and the edge of the covering 14, before the two members 12 and 14 are coupled, which is therefore arranged at the zone of the panel P in which the seaming operation is carried out. By virtue of the heating produced by the tool 66b, the polymeric adhesive reaches a pre-polymerization condition which allows the members 12 and 14 of the panel P to be permanently connected.

The induction heating fastening tool 66b, in a manner known per se, comprises a heat generator connected with a feeding and refrigeration unit (not shown), from which individual or twin tubular ducts 88 extend, which surround the zone of the station 28 in which the seamed panel P has to be positioned at the end of its lifting movement caused by the handling means 68.

When the panel P has reached the station 28, and while its members 12 and 14 are kept compressed by the combined action of the frame 50 and the relevant suction cup means and/or by the possible support frame 70, a high frequency current is fed to the tubular ducts 88, which induces a magnetic flow for producing their heating owing to induction and, consequently, the heating of the peripheral zone of the panel P where the polymeric adhesive is present to a temperature close to 180°C, in order to partially polymerize the polymeric adhesive. A cooling fluid is fed, in a manner known per se, in the inner cavity of the ducts 88 in order to avoid the overheating thereof.

The induction heating fastening tool 66b includes also a series of movable support units 90 (only one of which is shown in figures 9 and 10), which cause, through the movement of a linkage drive unit 92, as a result of the operation of a respective actuator 94, the swinging of a respective resting plate 96 which bears a resting block 98 of nonmagnetic material, usually made by a plastic material, which is shaped so as to correspond to a respective lower resting zone of the panel P. In particular, each plate 96 is movable as a result of the operation of the respective actuator 94 between a lowered position (figure 9), spaced from the travel of the panel P between the station 26 and the station 28, and a raised position (figure 10), in which the resting block 98 engages a zone of the lower surface of the panel P which is arranged at the station 28, in order to support the panel P during the induction heating fastening operation of the members 12 and 14 thereof.

The resting plates 96 of the support units 90 of the tool 66b define together a second resting structure for the panel P, which is intended to be used during the induction heating carried out in the station 28.

The operation of the apparatus 10 according to the present modification is analogous to that of the previous modification except from, when the panel P already seamed in the station 26, reaches the station 28, the actuators 94 are activated in order to bring the plates 96 to their raised positions, along the direction indicated by arrow B of figure 10, in which the respective shaped resting blocks 98 support the panel P in view of the heating step carried out by the tool 66b. Then, the induction heating device is activated until the adhesive interposed between the members 12 and 14 has reached the desired temperature.

Conveniently, an electronic control unit (not shown) is associated with the apparatus 10, which is adapted to manage in succession its operation steps and, in particular, to control the step of feeding a pre-assembled panel P to the station 26, to control the seaming step of the panel P, to manage the transfer step of the panel P from the station 26 to the station 28 in a coordinated manner, to control the movement of the support members of the panel P which are provided at the station 28, and the fastening step of the members 12 and 14 thereof in such a station, as well as the removal operation of the panel P from the apparatus 10.

## Claims

1. Seaming and fastening apparatus for assembling members of a composite panel, particularly for a motor vehicle body, comprising:
- a seaming station (26) including a first resting structure (30, 34) for allowing to support the members (12, 14) of the composite panel (P) which are kept close to each other in an assembly configuration, and adapted to carry out a seaming operation by seaming tools (42) for seaming the panel (P) at predetermined zones thereof, and
- first pressure means (50, 56) adapted to compress the members (12, 14) of the panel (P) at least during the seaming step and to assume a position in which the members (12, 14) of the panel (P) are kept close in the correct assembly configuration,
- a fastening station (28) spaced with respect to the seaming station (26), intended to carry out a reciprocal fastening operation by welding or heating the members (12, 14) of the panel (P) already seamed, which fastening station (28) comprises a second resting structure (82, 84; 96, 98) independent from said first support structure (30, 34) and adapted to bear the composite panel (P) during said fastening operation, and
- handling means (68) adapted to move the seamed composite panel (P) between the seaming station (26) and the fastening station (28), which handling means (68) are intended to bring said panel (P) in a position in which it can be engaged by the second resting structure (82, 84; 96, 98) during the execution of said fastening operation,
**characterized in that** said handling means (68) are associated with holding means (50, 70) for keeping the members (12, 14) of the panel (P) close and compressed in the correct assembly position while the panel (P) is moved between the seaming station (26) and the fastening station (28).

2. Apparatus according to claim 1, **characterized in that** the handling means (68) are operated in a manner coordinated with the pressure means (50, 56) during the movement of the seamed panel (P) between said seaming (26) and fastening (28) stations.

3. Apparatus according to claim 2, **characterized in that** the handling means (68) comprise vacuum holding members associated with the pressure means (50, 56).

4. Apparatus according to claim 2 or 3, **characterized in that** the handling means (68) comprise a support frame (70) which is part of a linear lifting device (70, 72, 74).

5. Apparatus according to any one of claims 1 to 4, **characterized in that** the fastening station (28) is arranged above the seaming station (26).

6. Apparatus according to any one of claims 1 to 5, **characterized in that** the first resting structure comprises a resting bench (30) which is stationary with respect to a frame (16) of the apparatus (10).

7. Apparatus according to claim 6, **characterized in that** the resting bench (30) comprises a peripheral resting zone (34) which can be engaged by the edge of the panel (P).

8. Apparatus according to claim 7, **characterized in that** the peripheral resting zone (34) of the resting bench (30) surrounds a through opening (36) inside of which said linear elevator device (70, 72, 74) extends.

9. Apparatus according to any one of claims 1 to 8, **characterized in that** the members (12, 14) of the panel (P) are fed to the seaming station (26) in a preassembled condition by a transfer frame (38).

10. Apparatus according to claim 9, **characterized in that** the transfer frame (38) is associated to an automatic handling device.

11. Apparatus according to any one of claims 1 to 10, **characterized in that** the pressure means include a blank holder (50) so shaped as to engage at least an edge portion of the panel (P), which can be moved vertically as a result of the operation of an actuator device (56).

12. Apparatus according to any one of claims 1 to 11, **characterized in that** the second resting structure (82, 84; 96, 98) is a movable structure adapted to assume an inactive configuration spaced from the panel (P) arranged in the fastening station (28), and an active configuration in which it engages portions of the composite panel (P) seamed and arranged in the fastening station (28) in order to support it during said fastening operation.

13. Apparatus according to claim 12, **characterized in that** the second resting structure comprises shaped resting members (84; 98) for resting the panel (P) during said fastening operation, which are made of a nonmagnetic material.

14. Apparatus according to any one of claims 1 to 13, **characterized in that** the fastening station (28) is adapted to carry out a welding operation of the members (12, 14) of the panel (P), preferably a resistance welding operation of the indirect projection type, and **in that** it comprises a series of support and welding tools (66a) including welding and earth electrodes (76, 80) as well as bracket support members (82, 84), each support and welding tool (66a) being movable between a position spaced from the panel (P) and an advanced position of engagement of the panel P as a result of the operation of a respective actuator device (86), when the panel (P) is positioned at the fastening station (28).

15. Apparatus according to any one of claims 1 to 13, **characterized in that** a polymeric adhesive is interposed between the members (12, 14) of the panel (P), and **in that** the fastening station (28) is adapted to carry out a heating operation of the edge of the panel (P), preferably an induction heating operation, for heating said polymeric adhesive to a predefined temperature in order to bring it in a pre-polymerization condition, said fastening station (28) including a series of support units (90, 92, 98) which are movable between a position lowered and spaced from the panel (P) and a raised position of engagement of the panel (P) as a result of the operation of a respective actuator device (94), when the panel (P) is positioned at the fastening station (28).

## Patentansprüche

1. Falz- und Befestigungsvorrichtung zur Verbindung der Elemente einer Verbundplatte, insbesondere für eine Kraftfahrzeug-Karosserie, umfassend:
- eine Falzstation (26) mit einer ersten Auflagerstruktur (30, 34) für die Abstützung der Elemente (12, 14) der Verbundplatte (P), die in der zusammengesetzten Konfiguration eng aneinanderliegend gehalten werden, und für die Durchführung einer Falzoperation mit Hilfe von Falzwerkzeugen (42), die die Verbundplatte (P) in vorbestimmten Bereichen falzen,
- erste Druckeinrichtungen (50, 56) zum Zusammendrücken der Elemente (12, 14) der Verbundplatte (P) zumindest während des Falzvorgangs und zum Einhalten einer Stellung, in der die Elemente (12, 14) der Verbundplatte (P) in ihrer exakt zusammengesetzten Konfiguration eng aneinanderliegend gehalten sind,
- eine Fixierstation (28), die zu der Falzstation (26) einen Abstand aufweist und dazu dient, die bereits gefalzten Elemente (12, 14) der Verbundplatte (P) durch Schweißen oder Erhitzen miteinander zu verbinden, wobei die Fixierstation (28) eine zweite Auflagerstruktur (82, 84; 96, 98) hat, die unabhängig von der ersten Auflagerstruktur (30, 34) ist und dazu dient, die Verbundplatte (P) während des Befestigungsvorgangs abzustützen, sowie
- Transportmittel (68) zum Verschieben der Verbundplatte (P) zwischen der Falzstation (26) und der Fixierstation (28) derart, dass die Verbundplatte (P) in eine Stellung gebracht wird, in der sie während des Befestigungsvorgangs von der zweiten Auflagerstruktur (82, 84; 96, 98) erfasst werden kann,
**dadurch gekennzeichnet, dass** den Transportmitteln (68) Haltemitteln (50, 70) zugeordnet sind, die die Elemente (12, 14) der Verbundplatte (P) während der Verschiebung der Platte (P) zwischen der Falzstation (26) und der Fixierstation (28) in der exakt zusammengefügten Konfiguration eng aneinandergedrückt halten.

2. Vorrichtung nach Anspruch 1, **dadurch gekennzeichnet, dass** die Transportmittel (68) während der Bewegung der gefalzten Verbundplatte (P) zwischen der Falzstation (26) und der Fixierstation (28) mit der Druckeinrichtung (50, 56) koordiniert betätigt werden.

3. Vorrichtung nach Anspruch 2, **dadurch gekennzeichnet, dass** die Transportmittel (68) Unterdruckgreiforgane haben, die mit der Druckeinrichtung (50, 56) verbunden sind.

4. Vorrichtung nach Anspruch 2 oder 3, **dadurch gekennzeichnet, dass** die Transportmittel (68) einen Tragrahmen (70) aufweisen, der Teil einer linearen Hubeinrichtung (70, 72, 74) ist.

5. Vorrichtung nach einem der Ansprüche 1 bis 4, **dadurch gekennzeichnet, dass** die Fixierstation (28) über der Falzstation (26) angeordnet ist.

6. Vorrichtung nach einem der Ansprüche 1 bis 5, **dadurch gekennzeichnet, dass** die erste Auflagerstruktur ein Stützbett (30) hat, das bezüglich eines Rahmens (16) der Vorrichtung (10) stationär ist.

7. Vorrichtung nach Anspruch 6, **dadurch gekennzeichnet, dass** das Stützbett (30) eine umlaufende Abstützzone (34) für den Rand der Verbundplatte (P) hat.

8. Vorrichtung nach Anspruch 7, **dadurch gekennzeichnet, dass** die umlaufende Abstützzone (34) des Stützbettes (30) eine durchgehende Öffnung (36) umgibt, innerhalb der sich die lineare Hubeinrichtung (70, 72, 74) erstreckt.

9. Vorrichtung nach einem der Ansprüche 1 bis 8, **dadurch gekennzeichnet, dass** die Elemente (12, 14) der Verbundplatte (P) in vormontiertem Zustand durch einen Übergaberahmen (38) in die Falzstation (26) überführt werden.

10. Vorrichtung nach Anspruch 9, **dadurch gekennzeichnet, dass** der Übergaberahmen (38) mit einer automatischen Transporteinrichtung verbunden ist.

11. Vorrichtung nach einem der Ansprüche 1 bis 10, **dadurch gekennzeichnet, dass** die Druckeinrichtungen einen Platinenhalter (50) aufweisen, der so geformt ist, dass er wenigstens einen Randbereich der Verbundplatte (P) erfasst, und der aufgrund der Operation eines Stellorgans (56) vertikal verschiebbar ist.

12. Vorrichtung nach einem der Ansprüche 1 bis 11, **dadurch gekennzeichnet, dass** die zweite Auflagerstruktur (82, 84; 96, 98) beweglich und in der Lage ist, eine inaktive Konfiguration mit Abstand von der in der Fixierstation (28) gehaltenen Verbundplatte (P) sowie eine aktive Konfiguration einzunehmen, in der sie Abschnitte der gefalzten Verbundplatte (P) erfasst, die sich in der Fixierstation (28) befindet, um diese während des Befestigungsvorgangs zu stützen.

13. Vorrichtung nach Anspruch 12, **dadurch gekennzeichnet, dass** die zweite Auflagerstruktur aus unmagnetischem Material bestehende Stützmittel (84; 98) vorbestimmter Form für die Abstützung der Verbundplatte (P) während des Befestigungsvorgangs aufweist.

14. Vorrichtung nach einem der Ansprüche 1 bis 13, **dadurch gekennzeichnet, dass** die Fixierstation (28) zur Ausführung von Schweißoperationen an den Elementen (12, 14) der Verbundplatte (P), vorzugsweise Widerstandsschweißoperationen mit indirekter Projektion ausgebildet ist und eine Reihe von Stütz- und Schweißwerkzeugen (66a) aufweist, die Schweiß- und Masseelektroden (76, 80) sowie Tragwinkel (82, 84) umfasst, wobei jedes Stütz- und Schweißwerkzeug (66a) aufgrund der Betätigung eines zugeordneten Stellorgans (86) zwischen einer von der Verbundplatte (P) beabstandeten Lage und einer diese erfassenden Lage beweglich ist, wenn die Verbundplatte (P) in der Fixierstation (28) positioniert ist.

15. Vorrichtung nach einem der Ansprüche 1 bis 13, **dadurch gekennzeichnet, dass** zwischen die Elemente (12, 14) der Verbundplatte (P) ein Polymerkleber eingebracht ist und dass die Fixierstation (28) zur Durchführung einer Aufheizung der Kante der Verbundplatte (P), vorzugsweise einer Induktionserwärmung ausgebildet ist, um den Polymerkleber auf eine für eine Vorpolymerisation geeignete, vorbestimmte Temperatur zu erhitzen, wobei die Fixierstation (28) eine Reihe von Stützeinheiten (90, 92, 98) hat, die durch die Betätigung mittels eines zugeordneten Stellorgans (94) zwischen einer unteren, von der Verbundplatte (P) beabstandeten Lage und einer diese erfassenden, oberen Lage beweglich sind, wenn die Verbundplatte (P) in der Fixierstation (28) positioniert ist.

## Revendications

1. Appareil de couture et de fixation pour assembler des éléments d'un panneau composite, en particulier pour une carrosserie de véhicule à moteur, comprenant:
- un poste de couture (26) comprenant une première structure de support (30, 34) permettant de supporter les éléments (12, 14) du panneau composite (P) qui sont maintenus à proximité l'un de l'autre dans une configuration d'assemblage, et adapté pour réaliser une opération de couture au moyen d'outils de couture (42) pour coudre le panneau (P) aux niveau de zones prédéterminées de celui-ci, et
- des premiers moyens de compression (50, 56) adaptés pour compresser les éléments (12, 14) du panneau (P) au moins pendant l'étape de couture et pour adopter une position dans laquelle les éléments (12, 14) du panneau (P) sont maintenus à proximité dans la configuration d'assemblage adéquate,
- un poste de fixation (28) situé à distance du poste de couture (26), destiné à réaliser une opération de fixation réciproque en soudant ou en chauffant les éléments (12, 14) du panneau (P) déjà cousu, ledit poste de fixation (28) comprenant une deuxième structure de support (82, 84 ; 96, 98) indépendante de ladite première structure de support (30, 34) et adaptée pour supporter le panneau composite (P) pendant ladite opération de fixation, et
- des moyens de manutention (68) adaptés pour déplacer le panneau composite cousu (P) entre le poste de couture (26) et le poste de fixation (28), lesdits moyens de manutention (68) étant destinés à amener ledit panneau (P) dans une position dans laquelle il peut recevoir la deuxième structure de support (82, 89 ;. 96, 98) pendant l'exécution de ladite opération de fixation,
**caractérisé en ce que** lesdits moyens de manutention (68) sont associés à des moyens (50, 70) pour maintenir les éléments (12, 14) du panneau (P) à proximité et à l'état compressés dans la position d'assemblage adéquate lorsque le panneau (P) est déplacé entre le poste de couture (26) et le poste de fixation (28).

2. Appareil selon la revendication 1, **caractérisé en ce que** les moyens de manutention (68) sont actionnés de manière coordonnée avec les moyens de compression (50, 56) pendant le déplacement du panneau cousu (P) entre lesdits postes de couture (26) et de fixation (28).

3. Appareil selon la revendication 2, **caractérisé en ce que** les moyens de manutention (68) comprennent des éléments de maintien par mise sous vide associés aux moyens de compression (50, 56).

4. Appareil selon la revendication 2 ou 3, **caractérisé en ce que** les moyens de manutention (68) comprennent un cadre de support (70) qui fait partie d'un dispositif de levage linéaire (70, 72, 74).

5. Appareil selon l'une quelconque des revendications 1 à 4, **caractérisé en ce que** le poste de fixation (28) est agencé au-dessus du poste de couture (26).

6. Appareil selon l'une quelconque des revendications 1 à 5, **caractérisé en ce que** la première structure de support comprend un banc de support (30) qui est stationnaire par rapport au bâti (16) de l'appareil (10).

7. Appareil selon la revendication 6, **caractérisé en ce que** le banc de support (30) comprend une zone de support périphérique (34) qui peut recevoir le bord du panneau (P).

8. Appareil selon la revendication 7, **caractérisé en ce que** la zone de support périphérique (34) du banc de support (30) entoure une ouverture traversante (36) à l'intérieur de laquelle s'étend ledit dispositif de levage linéaire (70, 72, 74).

9. Appareil selon l'une quelconque des revendications 1 à 8, **caractérisé en ce que** les éléments (12, 14) du panneau (P) sont alimentés jusqu'au poste de couture (26) dans un état pré-assemblé par un cadre de transfert (38).

10. Appareil selon la revendication 9, **caractérisé en ce que** le cadre de transfert (38) est associé à un dispositif de manutention automatique.

11. Appareil selon l'une quelconque des revendications 1 à 10, **caractérisé en ce que** les moyens de compression incluent un serre-flan (50) formé de sorte qu'il vient en engagement sur au moins une partie du panneau (P), qui peut être déplacé verticalement lors du fonctionnement d'un dispositif d'actionnement (56).

12. Appareil selon l'une quelconque des revendications 1 à 11, **caractérisé en ce que** la deuxième structure de support (82, 84 ; 96, 98) est une structure mobile adaptée pour adopter une configuration inactive à distance du panneau (P) agencé dans le poste de fixation (28), et une configuration active dans laquelle elle vient en engagement sur des parties du panneau composite (P) cousu et agencé dans le poste de fixation (28) afin de le supporter pendant ladite opération de fixation.

13. Appareil selon la revendication 12, **caractérisé en ce que** la deuxième structure de support comprend des éléments de support (84 ; 98) formés pour supporter le panneau (P) pendant ladite opération de fixation, qui sont faits d'un matériau non magnétique.

14. Appareil selon l'une quelconque de revendications 1 à 13, **caractérisé en ce que** le poste de fixation (28) est adapté pour réaliser une opération de soudage des éléments (12, 14) du panneau (P), de préférence une opération de soudage par résistance du type par projection indirecte, et **en ce qu'**il comprend une série d'outils de support et de soudage (66a) incluant des électrodes de soudage et de masse (76, 80) ainsi que des éléments de support formant crochet (82, 84), chaque outil de support et de soudage (66a) étant mobile entre une position éloignée du panneau (P) et une position avancée d'engagement du panneau (P) lors du fonctionnement d'un dispositif d'actionnement respectif (86), lorsque le panneau (P) est positionné au niveau du poste de fixation (28).

15. Appareil selon l'une quelconque de revendications 1 à 13, **caractérisé en ce qu'**un adhésif polymère est interposé entre les éléments (12, 14) du panneau (P), et **en ce que** le poste de fixation (28) est adapté pour réaliser une opération de chauffage du bord du panneau (P), de préférence une opération de chauffage par induction, pour chauffer ledit adhésif polymère jusqu'à une température prédéterminée afin de sorte qu'il soit dans une état de pré-polymérisation, ledit poste de fixation (28) comprenant une série d'unités de support (90, 92, 98) qui sont mobiles entre une position abaissée et éloignée du panneau (P) et une position avancée d'engagement du panneau (P) lors du fonctionnement d'un dispositif d'actionnement respectif (94), lorsque le panneau (P) est positionné au niveau du poste de fixation (28).
